## Europäisches Patentamt

## European Patent Office

## Office européen des brevets

(19)

(11) Publication number: **0 111 596**
**A1**

(12) **EUROPEAN PATENT APPLICATION**

(21) Application number: **82306362.3**

(22) Date of filing: **30.11.82**

(51) Int. Cl.³: **A 47 B 17/00**
**H 02 G 3/04**

(43) Date of publication of application:
**27.06.84 Bulletin 84/26**

(84) Designated Contracting States: -
**AT BE CH DE FR GB IT LI LU NL SE**

(71) Applicant: **Stow/Davis Furniture Company**
**25 Summer Avenue, N.W.**
**Grand Rapids Michigan(US)**

(72) Inventor: **Propst, Paul Lewis**
**16835 Oakleaf Court**
**Holland Michigan(US)**

(72) Inventor: **Richardson, Donald Allen**
**4255 Forest Creek Drive**
**S. E., Kentwood Michigan(US)**

(72) Inventor: **Hinrichs, Carl Bruce**
**12183 Blue Water Road**
**Grand Haven Michigan(US)**

(74) Representative: **Robinson, Anthony John Metcalf et al,**
**Kilburn & Strode 30 John Street**
**London, WC1N 2DD(GB)**

(54) **Furniture assemblies having wiring enclosures.**

(57) A wire enclosure having a wire raceway (80), a slot communicating with the raceway, and a cover for covering the slot. In one embodiment, the cover is a plate (11) which is hingedly mounted to one side of the slot and has a brush (40) extending from the free edge to seal the cover plate against the other side of the slot when the cover is closed. Electrical outlets (60) are mounted on the underside of the hinged cover so that the outlets are hidden when the cover is closed and easily accessible when the cover is open. In an alternative embodiment, the cover is solely a brush (104), mounted on one side of the slot, extending towards and engaging the other side of the slot.

Fig. 3.

Croydon Printing Company Ltd.

## FURNITURE ASSEMBLIES HAVING WIRING
## ENCLOSURES

This invention relates to wiring enclosures and, more particularly, to a furniture assembly wiring enclosure having a cover which is generally flush with the surface of the furniture.

As evidenced by the scope of the prior art, a need currently exists for an aesthetically pleasing, flexibly covered wiring enclosure for furniture assemblies so that the interior of the wiring enclosure cannot normally be seen while wires can still pass through the flexible cover. The wiring enclosure should preferably include easily accessible electrical outlets so that wires passing into the enclosure may be readily connected to a power source.

Although wiring enclosures have been designed for use on furniture assemblies, these devices are subject to serious drawbacks. One approach includes an elongated tubular enclosure having both a longitudinal slot through which wires can be passed and a flexible plastic strip covering the slot. The enclosure is secured to the rear edge of the desk top so that the opening extends above the desk top and faces forward. An example is described in US-A-4,094,561. This device has several disadvantages. First, because the mounted device extends above the desk top, it is unsightly and does not blend in with the desk top. Second, the plastic wiper strip which is used as a cover for the longitudinal slot has a cheap appearance and consequently is unsuitable for installation on high quality furniture. Third, absolutely no provision is made for connecting wires within the enclosure to a power source. Consequently, electrical connections would have to be made with a power source away from the desk top.

Another approach is to construct a desk having a wiring enclosure integrally incorporated therein. An example showing this construction is US-A-3,883,202. Electrical outlets are located in the bottom of the trough, and a longitudinal slot in the front vertical face of the trough extends into the trough from the rear edge of the desk top. However, the slot and a portion of the trough extend above at least parts of the desk top so that the entire assembly has a somewhat unsightly appearance. Second, the enclosure is not entirely covered so that one may easily see into the wire enclosure, adding to the unsightliness of the assembled product. Finally, although electrical outlets are provided in the trough, these outlets are somewhat inaccessible because they are located at the bottom of the trough. A person obtaining access to the outlets would have to lean over the entire desk top in order to look downwardly into the trough to make electrical connections.

According to one aspect of the present invention, a furniture assembly comprises a wiring raceway having a slot opening adjacent a surface area of the assembly, and means for flexibly closing the slot, characterised in that the closing means comprises a plurality of flexible bristles in a brush-like configuration, the bristles being retained in retaining means and extending from the retaining means to one edge of the slot to completely cover the slot while permitting a wire extending through the slot to be pulled longitudinally along the slot.

According to another aspect of the present invention, a furniture assembly has a surface with a slot extending through a portion thereof, the slot having first and second sides, a wiring raceway adjacent said slot, said slot communicating with said raceway, and means for covering said slot, characterised in that said covering means comprises a generally rectangularly shaped, planar cover member having first and second edges, said cover member being mounted in said slot with the distance between said first and second edges being less than the distance between said first and second sides thereby providing a space between said second edge and said second side of said slot through and along which an electrical wire can extend and be pulled; said cover member is movable to provide access into said raceway; and a flexible cover means flexibly covers the said space between said second edge and said second side of said slot whereby the wire can be pulled through and along said opening when when the said cover is in closed position.

By constructing the furniture assembly in accordance with the present invention, it is possible to meet the following criteria. In view of the problems and drawbacks of the prior art, a wire enclosure for a furniture assembly should be constructed so as to be flush with any exterior surfaces of the assembly. Such a wire enclosure should be unobtrusive and should not detract from the overall appearance of the furniture. Second, any slot extending into the wire enclosure should be covered with an aesthetically pleasing, flexible cover. The interior of the wire enclosure assembly should not normally be seen, but wires should still be able to be passed through the cover. The cover should blend in with the furniture surface. Finally, the enclosure should include an easily accessible power source connection so that wires in the enclosure may be readily connected to the power source.

Although brushes have been used as sealing devices in other fields such as windows (US-A-4,037,378 and US-A-4,195,681) and animal exits (US-A-2,778,417), brushes have not been used as a sealing means for wire enclosures or indeed furniture assembly components of any type. A brush cover enables the wire enclosure to be sealed in an aesthetically pleasing manner. The brush provides a richer look than other types of sealing means such as plastic strips.

The invention may be carried into practice in various ways but one piece of furniture incorporating a wiring enclosure assembly embodying the invention and one possible modification will now be described by way of example with reference to the accompanying drawings, in which:

Figure 1 is a fragmentary perspective view of a modular furniture assembly with the wiring enclosure installed and the cover fully open;

Figure 2 is a fragmentary cross-sectional view taken along line II-II of Figure 1 with the cover partially open;

Figure 3 is a fragmentary cross-sectional view similar to Figure 2 with the cover fully closed;

Figure 4 is a fragmentary perspective view of a modular furniture assembly with an alternative wiring enclosure installed;

Figure 5 is a partial, enlarged, perspective view of the structure for mounting the bristles on the cover of the assembly shown in Figures 1 to 3; and

Figure 6 is a partial, enlarged, perspective view of the cover hinge used in the assembly shown in Figures 1 to 3.

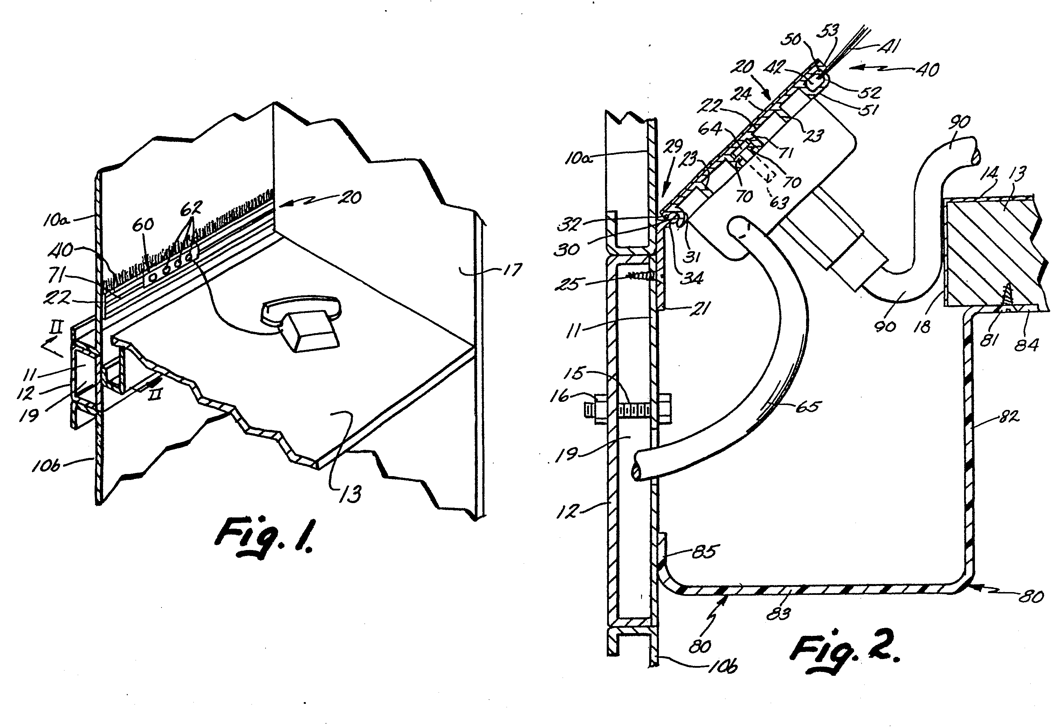

One environment in which the wiring enclosure of the invention may be used is a modular furniture assembly as shown in Figure 1. This assembly is of the type which includes two side panels, one identified by reference numeral 17 and the other not shown. Between these side panels is mounted a working surface or desk top 13. A rear panel structure 2 formed by upper and lower panels 10a and 10b and an energy core 19 consisting of an energy core housing 12 and a cover plate 11 extend between the side panels at the rear of desk top 13. This rear panel structure 2 is supported by a wall panel support structure (not shown).

A wiring enclosure 1 is mounted at the rear portion of the desk top 13 between the rear edge 18 of the desk top 13 and the rear panel structure 2. This assembly includes a raceway or well 80 mounted under the opening or slot formed between the rear edge 18 and the rear panel structure 2, a cover assembly 20 pivotally mounted on the rear panel structure 2, and the energy core housing 12 in which the electrical means for supplying power to the cover assembly 20, as will be disclosed hereinafter, is located.

The cover assembly 20 includes a hinge plate 21, a cover 22, a brush 40 secured to the free edge of the cover 22, and an outlet assembly 60. The hinge plate 21 is secured to either the upper panel 10a or the cover plate 11 using hinge screws 25 so that the plate 21 is located substantially opposite the rear edge 18. Hingedly mounted to the plate 21 is the cover 22. Ribs 23 run the full length of the underside of the cover 22 to provide additional strength. Both the hinge plate 21 and cover 22 are preferably extruded from aluminium. Cover veneer 24 is applied to the upper surface of the cover 22 and selected to match the desk veneer 14 so that a coordinated appearance is achieved.

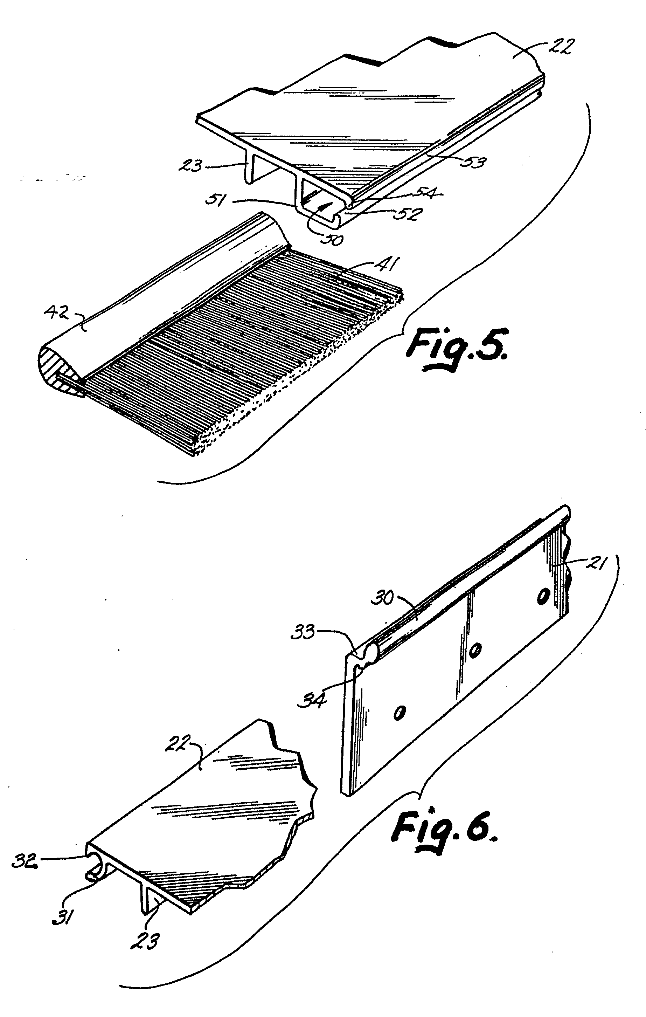

A hinge 29, shown in more detail in Figure 6, is continuous and runs the full length of the cover 22. The male portion of the hinge 29 comprises a bulbous flange 30 which extends outwardly and upwardly from the hinge plate 21, the enlarged portion of the bulb providing the hinge axis. The cover 22 is hingedly mounted on the bulbous flange 30 by the combination of a raised rear edge 32 and a hinge flange 31 which extend away from cover 22 and around the bulbous flange 30. Movement of the cover 22 is stopped in the upward direction when the rear raised edge 32 abuts an upper surface 33 on the hinge plate 21 and in the downward direction when the hinge flange 31 abuts a forward facing surface 34 on the hinge plate.

The brush 40 extends along substantially the entire length of the cover 22. It comprises a plurality of bristles 41 secured in a brush-like arrangement by a pinch plate 42. The pinch plate 42 is an elongated member made of a pliable material and generally U-shaped in cross section. The bristles 41 are secured by placing them within the U-shaped pinch plate 42 and clamping the same shut entrapping the bristles 41. This brush is similar to brushes found on the beater bar of a suction cleaner. Bristles 41 engage the rear edge 18 of the desk top when the cover 22 is completely closed, as shown in Figure 3.

As best disclosed in Figure 5, the brush 40 is mounted on the cover 22 by means of a brush channel 50 which runs substantially the entire length of the cover 22. The brush channel 50 is defined by a flange 53 which extends forwardly and then downwardly from the cover 22 and a flange 51 which extends forwardly and then upwardly of the cover 22. This provides a channel, the interior of which is wider than the space between the retaining edges 52 and 54 of the flanges 51 and 53, respectively; whereby brush 40 is retained within the channel 50.

The outlet assembly 60 comprises a housing 61, outlets 62 located therein, and power cord 65. Outlets 62 are generally of a conventional type providing 240 volt, 50 Hertz electrical current but other standard voltages and frequencies could be employed. Outlets 62 are conventionally wired (not shown) to the power cord 65 which extends from the housing 61 through the cover plate 11 to a power source connection (not shown) located within the energy core 19.

Secured within the upper surface of the housing 61 are bolts 63 having bolt heads 64. The bolts 63 extend away from the housing 61 so that the bolt heads 64 are located somewhat above the housing 61.

The outlet assembly 60 is slidably mounted on the undersurface of the cover 22 by positioning the bolt heads 64 within a bolt channel 71 which runs substantially the entire length of the undersurface of the cover 22. The bolt channel 71 is defined by two adjacent ribs 23 and opposing bolt flanges 70 which extend towards each other from the adjacent ribs. Consequently, the bolt channel 71 is generally C-shaped in cross section, securing the bolt heads 64 therein. When mounted in this manner, the outlet assembly 60 may be slid along the full length of the cover 22.

The raceway or well 80 formed by the flanges 82 and 83 is generally L-shaped in cross section and extends substantially the entire length of the desk top 13. An attaching flange 84 extends forwardly from the upper edge of the flange 82, and a flange 85 extends upwardly from the rear edge of the horizontal flange 83. The attaching flange 84 is secured to the undersurface of the desk top 13 using screws 81. The exact mounting location is chosen so that the flange 85 abuts the mounting plate 11. The raceway 80 houses the wires within the enclosure to prevent them from sagging down where they can be seen below the desk top 13. The raceway 80 is preferably extruded from plastic.

When one is using an electrical device (not shown) on the desk top 13 and desires to connect it to a power source, one pulls the cover 22 into the fully open position as shown in Figure 1. The outlet assembly 60 with outlets 62 therein is then easily accessible being located above the desk top 13. The user then plugs an electrical plug 91 into an outlet 62. The cover 22 is then pivoted downwardly into the fully closed position as shown in Figure 3. As the cover 22 is pivoted downwardly, the outlet assembly 60 is lowered into the wire enclosure so that both the outlet assembly 60 and the plug 91 are hidden from view. When the cover 22 is fully closed, the brush 40 extends from the cover 22 to the rear edge 18 sealing the cover 22 against the desk top 13. The desk top 13 and the cover 22 then provide a uniform planar surface interrupted only by the brush 40. The wire 90 extending from the electrical plug 91 passes through the brush 40 and on to the desk top 13 where the electrical device is located. Any extra or loose wire between the device and the brush 40 is then pushed into the wire enclosure to further clean up the appearance of the desk top. The wire 90 may be moved along the entire length of the brush 40 with the cover 22 fully closed. Therefore, devices may be repositioned on the desk top 13 and their associated cords may be slid along the brush 40.

A plurality of electrical appliances could be attached in the manner described herein. Furthermore, telephone wires could also be run into the wiring enclosure if suitable connection means are provided therein.

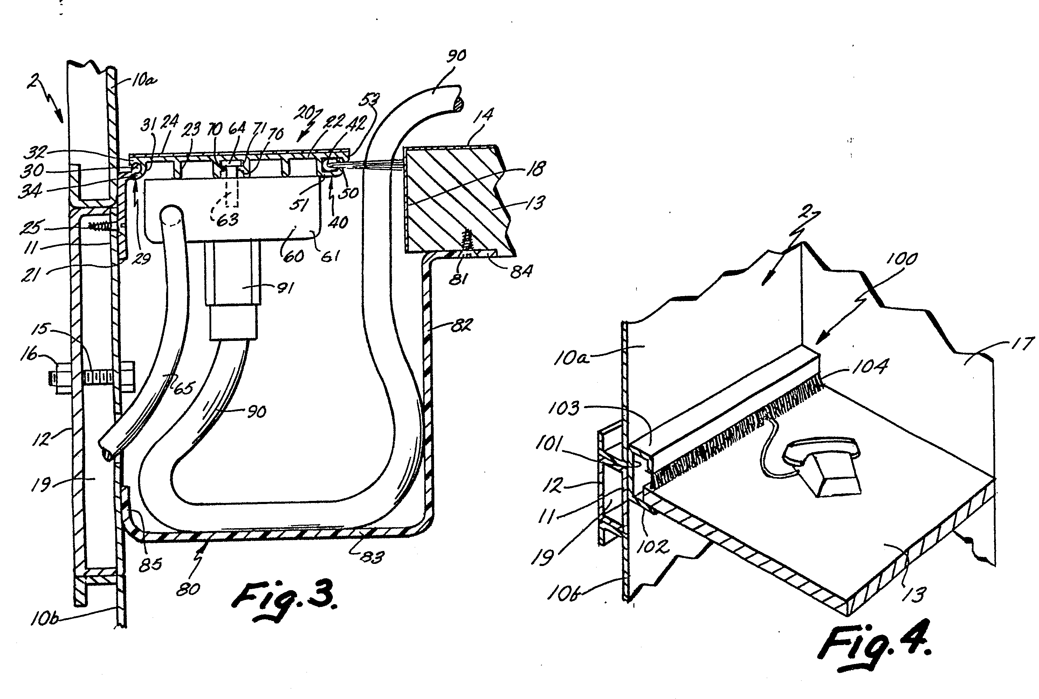

A possible modification is shown in Figure 4, where upper and lower panels 10a and 10b, housing 12, cover plate 11, desk top 13 and side panel 17 correspond to their like-numbered counterparts in the previous embodiment.

A wiring enclosure 100 extends between the side panels and is mounted on the rear panel structure 2 by securing an attaching plate 101 thereto. A desk top flange 102 extends forwardly from the lower edge of the attaching plate 101 and engages the undersurface of the desk top 13. Extending forwardly and then downwardly from the upper edge of the attaching plate 101 is a brush support flange 103 which is generally L-shaped in cross section. The brush support flange 103 is located above the desk top 13 defining a slot therebetween through and along which wires can extend and be pulled. Finally, a brush 104 extends downwardly from the brush support flange 103 and engages the desk top 13 flexibly covering the slot.

The wiring enclosure could be mounted within a slot in the upper panel 10a and open forwardly. Alternatively, the enclosure could be installed on a desk top or credenza having no adjacent wall panel.

CLAIMS

1.    A furniture assembly comprising a wiring
raceway (80) having a slot opening adjacent a surface
area (14) of the assembly, and means for flexibly
closing the slot, characterised in that the closing
means comprises a plurality of flexible bristles
(41, 104) in a brush-like configuration, the bristles
being retained in retaining means (42) and extending
from the retaining means to one edge (18) of the
slot to completely cover the slot while permitting
a wire (90) extending through the slot to be pulled
longitudinally along the slot.

2.    A furniture assembly as claimed in Claim
2 in which the retaining means comprises an elongated
pinch plate (42) generally U-shape in cross section
pinchingly securing the mounting ends of the bristles
(41).

3.    A furniture assembly as claimed in Claim 2
in which the mounting means comprises a bristle mounting
channel (50) running substantially the entire length
of the slot, the pinch plate (42) being located within
the bristle mounting channel and said bristles extending outwardly therefrom.

4.    A furniture assembly as claimed in Claim 1
or Claim 2 or Claim 3 in which the said surface area
is provided by a desk top (13) and the slot is located
in the surface of the desk top.

5.   A furniture assembly as claimed in Claim 1
or Claim 2 or Claim 3 which includes a wall panel portion
(2) and a horizontally mounted panel portion (13)
and the slot is located along an exterior surface of
the wall panel between the wall panel portion and the
horizontally mounted panel portion.

6.   A furniture assembly having a surface (14)
with a slot extending through a portion thereof, the
slot having first and second sides, a wiring raceway
(80) adjacent said slot, said slot communicating with
said raceway, and means for covering said slot,
characterised in that said covering means comprises
a generally rectangularly shaped, planar cover member
(22) having first and second edges, said cover member
being mounted in said slot with the distance between
said first and second edges being less than the
distance between said first and second sides thereby
providing a space between said second edge and said
second side of said slot through and along which an
electrical wire (90) can extend and be pulled;  said
cover member (22) is movable to provide access into
said raceway;  and a flexible cover means (40) flexibly
covers the said space between said second edge and said
second side of said slot whereby the wire (90) can be
pulled through and along said opening when the said
cover is in closed position.

7. A furniture assembly as claimed in Claim 6 in which the cover member is hingedly mounted by said first edge to said first side of said slot and can pivot outwardly from said slot and further comprising means (31, 34) preventing said cover member from pivoting beyond a closed position within said slot wherein said cover member is generally flush with said surface of said furniture assembly.

8. A furniture assembly as claimed in Claim 6 or Claim 7 which includes an electrical connecting means (60) and means (63, 64, 70, 71) mounting said electrical connecting means on an undersurface of said cover member, said undersurface facing into said slot when said cover member is in said closed position and facing outwardly for access when said cover is in open position.

9. A furniture assembly as claimed in Claim 8 in which the first mounting means permits said electrical connecting means to slide lengthwise along said undersurface of said cover member.

10. A furniture assembly as claimed in Claim 9 in which the mounting means comprises a support (70, 71) member having a channel running substantially the full length of and extending away from the undersurface of the cover member, the channel providing a track, and a shaft (63) mounted on the electrical connecting means and having a head (64) mounted thereon, the head being located and supported within the track for sliding movement in the channel.

11. .A furniture assembly as claimed in any of Claims 6 to 10 in which the flexible sealing means comprises a plurality of bristles (41) in a brush-like configuration (40), each of said bristles having a mounting end and a free end, a substantial proportion of the free ends being located immediately adjacent the second side of the slot, means (42) retaining the bristles in said configuration, the mounting ends of the bristles being secured in the retaining means, and the retaining means being located at the second edge of the cover member (22).

12. A furniture assembly as claimed in Claim 11 in which the retaining means comprises an elongated pinch plate (42) generally U-shaped in cross section pinchingly securing said mounting ends of said bristles.

13. A furniture assembly as claimed in Claim 12 in which the pinch plate (42) is retained in a bristle mounting channel (50) running substantially the entire length of said second edge of said cover member and extending toward said second side of said slot when said cover is in said closed position, said pinch plate being located within said bristle mounting and said bristles extending outwardly therefrom.

0111596

Fig. 2.

Fig. 1.

Fig.3.

Fig.4.

2/3

0111596

0111596

22

23

53

51

54

52

50

42

41

**Fig.5.**

21

30

33

34

22

32

31

23

**Fig.6.**

## EUROPEAN SEARCH REPORT

Application number

EP 82 30 6362

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | CH-A- 614 364 (WEBER)<br><br>* Page 3, column 2, lines 19-33; figures 1-3 *<br><br>--- | 1,4,6-8 | A 47 B 17/00<br>H 02 G 3/04 |
| A | GB-A-2 086 148 (VICKERS)<br><br>* Abstract; figures 1-7 *<br><br>--- | 1,4,6,7 | |
| A,D | US-A-3 883 202 (KONIG)<br>* Column 2, lines 40-54; figure 4 *<br><br>----- | 4,9 | |

TECHNICAL FIELDS
SEARCHED (Int. Cl. ³)

A 47 B
H 02 G

The present search report has been drawn up for all claims

| Place of search<br>THE HAGUE | Date of completion of the search<br>27-09-1983 | Examiner<br>SCHMITTER BERNARD |
|---|---|---|

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03 82